# EUROPÄISCHE PATENTSCHRIFT

(11) **EP 1 395 859 B1**
(45) Veröffentlichungstag und Bekanntmachung des Hinweises auf die Patenterteilung: **22.03.2006**
(21) Anmeldenummer: 02745140.0
(22) Anmeldetag: 12.06.2002
(51) Int. Cl.: G02B 6/00

(54) **Laserjustierbarer Aktor, optisches Bauelement und Justierverfahren**
Laser adjustable actuator, optical component and adjustment method
Actionneur ajustable à l'aide d'un laser, composant optique et procédé d'ajustage

(30) Priorität: 15.06.2001 DE 10128827
(43) Veröffentlichungstag der Anmeldung: 10.03.2004
(73) Patentinhaber: FINISAR CORPORATION, Sunnyvale, CA 94089-1133 (US)
(72) Erfinder: SEITZ, Burkhard, 81249 München (DE); STRÖL, Klaus, 85652 Gelting (DE); MEHNERT, Axel, 81377 München (DE)
(74) Vertreter: Meissner, Bolte & Partner
(86) Internationale Anmeldenummer: PCT/DE2002/002143
(87) Internationale Veröffentlichungsnummer: WO 2002/103417

(56) Entgegenhaltungen:
- EP-A- 0 373 225
- EP-A- 0 488 658
- EP-A- 0 638 895
- EP-A- 1 186 927
- WO-A-01/37019
- DE-A- 19 805 849
- US-A- 5 195 155
- US-A- 5 347 415
- US-A- 6 154 952
- PATENT ABSTRACTS OF JAPAN vol. 007, no. 051 (P-179), 26. Februar 1983 (1983-02-26) -& JP 57 198415 A (SUMITOMO DENKI KOGYO KK), 6. Dezember 1982 (1982-12-06)
- PATENT ABSTRACTS OF JAPAN vol. 2000, no. 15, 6. April 2001 (2001-04-06) -& JP 2000 357309 A (SONY CORP), 26. Dezember 2000 (2000-12-26)
- PATENT ABSTRACTS OF JAPAN vol. 006, no. 075 (P-114), 12. Mai 1982 (1982-05-12) -& JP 57 013301 A (PENTEL KK), 23. Januar 1982 (1982-01-23)

## Beschreibung

Die Erfindung betrifft einen laserjustierbaren Aktor, insbesondere für das Justieren optischer oder faseroptischer Komponenten, ein optisches Bauelement sowie ein Justierverfahren.

Für das hochgenaue Justieren, beispielsweise für Komponenten der Mikromechanik, wurden in jüngerer Zeit Läser-Justierverfahren und hierfür geeignete Aktoren entwickelt.

Das Grundprinzip des Laserjustierens besteht darin, einen vorbestimmten Bereich eines Aktors mittels eines hochenergetischen, vorzugsweise gepulsten Laserstrahls in kurzer Zeit zu erhitzen, wobei die thermische Ausdehnung des betreffenden Bereichs durch entsprechende weitere Bereiche des Aktors blockiert wird. Hierdurch bauen sich in diesem erhitzten Bereich Druckspannungen auf, die bei Erreichen der Fließgrenze zu einer plastischen Verformung dieses Bereichs fuhren. Bei Abkühlen dieses Bereichs nach dem Abschalten der hochenergetischen Laserstrahlung wird das thermische Schrumpfen dieses Bereichs durch die weiteren Bereiche des Aktors wiederum im Wesentlichen behindert. Dies führt dazu, dass sich in dem zuvor erhitzten Bereich Zugspannungen aufbauen, die zu einer definierten Verformung des Aktors führen, wodurch das Justieren einer mit dem Aktor verbundenen Komponente ermöglicht wird.

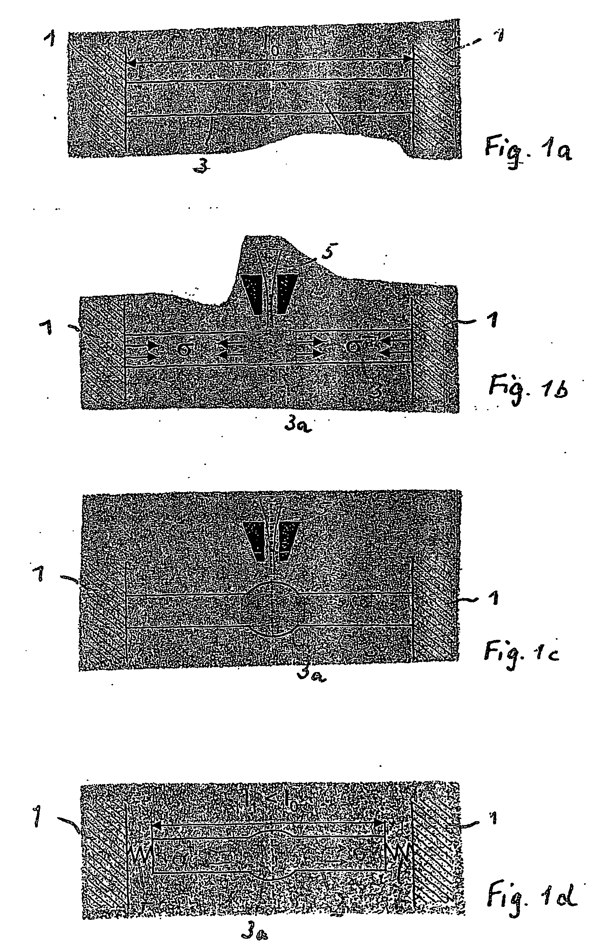

Das Prinzip eines derartigen Juatietverfahrens ist in Fig. 1 dargestellt. Fig. 1a zeigt den Ausgangszustand eines zwischen zwei starren Begtenzungen 1 eingespannten Balkens 3 aus einem geeigneten Material. Der Balken 3 weist bei der Ausgangstemperatur, beispielsweise der Raumtemperatur (20 °C), die Länge l₀ auf. Der mittlete Bereich 3a des Balkens 3 wird mittels eines Laserstrahls 5 in kurzer Zeit erhitzt.

Hierdurch entstehen zunächst im Balken 3 Druckspannungen σ⁽⁻⁾, da die thermische Längenausdehnung des Balkens 3 durch die starren Begtenzungen 1 blockiert ist.

In dieser Phase wird üblicherweise auch eine negative Dehnung 8 definiert, die den im Balken 3 ausgebildeten Druckspannungen entspricht. Diese Phase des Justiervetfahrens ist in Fig. 1b dargestellt.

Überschteiten die Druckspannungen σ⁽⁻⁾ die tempexaturabhängige Fließgrenze σ_{F} so kommt es zu einer plastischen Verformung des Balkens 3 im Bereich 3a. Entsprechend werden hierbei die Druckspannungen im Balken 3 reduziert. Diese Situation ist in Fig. 1c dargestellt.

Nach dem Abschalten des Laserstrahls 5 beginnt der Bereich 3a des Balkens 3 abzukühlen, wodurch ein thermisches Schrumpfen des Balkens 3 verursacht wird. Hierdurch entstehen im Balken 3 Zugspannungen σ⁽⁺⁾, die in der Praxis häufig in der Nähe der temperatutabhängigen Fließgtenze σ_{F} (T) liegen. Diese Situation ist in Fig. 1d symbolisch dargestellt, indem in Längsrichtung des Balkens 3 gesehen, dessen Enden über federnde Elemente 7 mit den starren Begrenzungen 1 verbunden ist. Die den Zugspannungen σ⁽⁺⁾ entsprechenden Federkräfte bewirken bei einem praktisch realisierren Aktor eine definierte Verformung des Aktors. Hierzu ist in Fig. 1d nochmals verdeutlicht, dass die Zugspannungen σ⁽⁺⁾ durch das Verkürzen des Balkens 3 infolge der während des Ethitzens verursachten plastischen Verformung im Bereich 3a entstehen, wobei die Länge des Balkens l₁ nach dem justiervorgang bei der Ausgangstemperatur kleiner ist als die ursprüngliche Länge l₀ bei der Ausgangstemperatur.

Ein ähnliches Laserjustierverfahren und ein entsprechender laserjustierbarer Aktor sind beispielsweise in *EP 0 638 895 A1* beschrieben.

Ein Problem bei den bisher bekannten Justierverfahren besteht darin, dass, wie bereits vorstehend erwähnt, die im Balken 3 eingefrorenen Zugspannungen relativ nahe an der Fließgrenze σₚ liegen. Gleiches kann auch für die Druckspannungen gelten, die in denjenigen Bereichen auftreten, die die thermische Expansion bzw. das thermische Schrumpfen des Balkens blockieren. Da mikromechanisehe oder optische Komponenten bzw. Baugruppen in der Praxis immer für einen bestimmten Temperaturbereich, beispielsweise einen Bereich von -40 °C bis +80 °C, spezifiziert sind, und innerhalb des spezifizierten Bereichs vorbestimmte Anforderungen an die Genauigkeit und Langzeitstabilität erfüllen müssen, kommt es bei bisher bekannten Justierverfahren dann zu einer Dejustage des Aktors, wenn die justierten Komponenten bzw. die Baugruppe auf eine Temperatur in det oberen Region des spezifizieren Bereichs gebracht werden und die ursprüngliche Justage bei einer wesentlich niedrigeren Temperatur, beispielsweise Raumtemperatur durchgeführt wurde, Dieser Effekt wird durch die Temperaturabhängigkeit der Fließgrenze σₚ verursacht, wobei die meisten Materialien, die zur Herstellung von Aktoren für Laserjustierverfahren geeignet sind, eine mit steigender Temperatur fallende Fließgrenze aufweisen. Wird eine Temperatur erreicht, bei der die Fließgrenze σ_{F} den Wert der eingefrorenen Zugspannungen unterschreitet, so kommt es zu einem Fließen des Materials und zu einem Abbau der Zugspannungen auf den Wert der Fließgrenze σ_{F} bei der betreffenden Temperatur. Hiermit verbunden ist selbstverständlich eine entsprechende Dejustage des Aktors, die zumindest für hochgenau zu justierende Komponenten, die über einen großen Temperaturbereich spezifiziert werden müssen, nicht akzeptabel ist.

Die *DE 198 05 849 A1* offenbart ein Verfahren zum Aufbauen und Verbinden von optischen Komponenten, bei denen nach dem Verbindungsprozess die Lage der optischen Komponenten bestimmt wird und eine Dejustage ermittelt wird und ausgeglichen wird durch Laserfeinrichten durch Bestrahlung von zumindest einem Teil eines Gelenkes, um diesen Teil gezielt zum Verbiegen zu bringen, wobei die Bestrahlungsleistung und Dauer jeweils abhängig von der ermittelten Dejustage bestimmt wird.

In der früher angemeldeten jedoch nachveröffentlichten *EP 1 186 927 A2* ist eine Verstellvorrichtung für die Justage einer Linse in einer optoelektronischen Sende-/Empfangseinrichtung mit einer Anzahl Aktoren, die durch lokale Beaufschlagung von Laserstrahlung in ihrer Form oder ihrer Länge veränderbar sind, offenbart. Die Aktoren sind an einem Ende mit einer ortsfesten Basisplatte und an ihrem anderen Ende mit einer beweglichen Trägerplatte verbunden und so angeordnet, dass mit ihnen eine Grobjustierung und eine anschließende Feinjustierung mittels des Laserstrahls möglich ist.

Der Erfindung liegt die Aufgabe zugrunde, einen laserjustierbaren Aktor, insbesondere für das Justieren optischer oder faseroptischer Komponenten, sowie ein optisches Bauelement mit einem derartigen Aktor sowie ein Justierverfahren zu schaffen, bei dem eine verbesserte Langzeitstabilität eines justierten Aktors bzw. einer Baugruppe mit einem derartigen Aktor innerhalb eines vorbestimmten Temperaturbereichs gewährleistet werden kann. Das Verfahren soll mit geringen zeitlichem und finanziellem Aufwand durchführbar sein.

Die Erfindung löst diese Aufgabe hinsichtlich des Aktors mit den Merkmalen des Patentanspruchs 1 für alle benannten Vertragsstaaten mit Ausnahme von FR und GB und alle ernannten Erstreckungsstaaten und hinsichtlich des optischen Bauelements mit den Merkmalen des Patentanspruchs 1 für die Vertragsstaaten FR und GB oder mit den Merkmalen des Patentsanspruchs 10 für alle benannten Vertragsstaaten mit Ausnahme von FR und GB und alle Erstreckungsstaaten und hinsichtlich des Verfahrens mit den Merkmalen des Patentanspruchs 14 für alle benannten Vertragsstaaten mit Ausnahme von FR und GB und alle benannten Erstreckungsataaten oder mit den Merkmalen des Patentanspruchs 12 für die Vertragsstaaten FR und GB.

Ein Aktor gemäß der Erfindung, mit dem auch das erfindungs gemäße Verfahren auf besonders einfache Weise realisiert werden kann, weist einen Trägerbereich zur Aufnahme eines zu justierenden Elements und mindestens einen ersten und einen zweiten Justierbereich auf, wobei der erste Justierbereich so ausgebildet ist, dass bei Durchführung eines Justiervorgangs mittels des ersten Justierbereichs, bei gleicher zugeführter Energie, ein größerer Justiereffekt erzielt wird als bei der Durchführung eines weiteren Justiervorgangs mittels des zweiten Justierbereichs, Durch diese "zweistufige" Ausbildung kann erreicht werden, dass selbst bei einem Durchfahren des gesamten zulässigen Temperaturbereichs nur eine solche Dejustage des zweiten Justierbereichs erfolgt, die innerhalb zulässiger Grenzen liegt. Dies kann mit dadurch erzielt werden, dass beim Justieren des zweiten Justierbereichs ein "Überjustieren" erfolgt, d. h. ein Justieren derart, dass die in den wesentlichen Bereichen eingefrorenen Spannungen bei einer Erwärmung und einem damit verbundenen Fließen des Materials in den wesentlichen Bereichen zunächst eine Verformung des Aktors in einer Richtung hervorrufen, die zu einer "Verbesserung" der Justierposition führt.

Der Aktor ist aus einem im Wesentlichen ebenen Element hergestellt, welches einen zentralen Bereich umfasst, ausgehend von dem sich mehrere, vorzugsweise drei oder sechs, Arme radial nach außen erstrecken, wobei die Arme im Wesentlichen rechtwinklig zum zentralen Bereich umgebogen sind. Ein derartiger Aktor kann einen Rohraktor ersetzen, ist jedoch wesentlich einfacher und kostengünstiger herstellbar.

Im einfachsten Fall können drei Arme in vorzugsweise einem Winkelabstand von 120° vorgesehen sein, wobei in jedem Arm ein erster und ein zweiter Justierbereich vorgesehen ist.

In einer anderen Ausführungsform können sechs Arme in einem Winkelabstand von 60° vorgesehen sein, wobei in jedem zweiten Arm ein erster und ein zweiter Justierbereich vorgesehen ist. Werden alle Arme in die selbe Richtung umgebogen und die Längsseiten der Arme im umgebogenen Zustand verbunden, vorzugsweise verschweißt oder verlötet, so dass sie eine im wesentlichen hohlzylindrische Wandung bilden, entsteht praktisch ein Rohxaktor.

Ein hinsichtlich der im Wesentlichen zylindrischen Wandung dichter Aktor kann dadurch hergestellt werden, dass die Brücken als Stege mit einer größeren Dicke als die seitlich der Stege vorgesehenen Bereiche ausgebildet sind, wobei die Dicke der seitlich der Stege vorgesehenen Bereiche gegenüber der Dicke der Stege so gewählt ist, dass bei einern Jusdervorgang ein ausreichender Justiereffekt erzielbar ist. Die Brücken bzw. Stege sind also seitlich nicht von Durchbrüchen oder Ausnehmungen begrenzt, sondern von einer Wandung geringerer Dicke. Sind bei dem aus einem ebenen Teil mit sechs Armen hergestellten Rohraktor nur in jedem zweiten Arm Justierbereiche ausgebildet, so können in den übrigen Armen, vorzugsweise an der selben axialen Position wie die Justierbereiche, Bereiche mit dünnerer Wandstärke vorgesehen sein, um ein leichteres und definierteres Verformen des Aktors und damit einen definierteren Justiervorgang zu ermöglichen.

Diese Maßnahme des Vorsehens von Bereichen dünnerer Wandstärke, die eine Verformung des Aktors bei einem Justiervorgang nicht wesentlich behindern (und hierbei gebogen oder gefaltet werden), anstelle von Durchbrüchen zwischen Bereichen des Aktors, die gegeneinandex versetzt oder verkippt werden sollen, ist generell auf jede geometrische Struktur eines Aktors anwendbar. Hierdurch lassen sich zumindest bereichsweise dichte, insbesondere gasdichte Aktoren herstellen. Ein Rohraktor kann, wie vorstehend erwähnt, mit einer dichten Wandung hergestellt werden. Werden die Stirnseiten des Rohraktors ebenfalls verschlossen, kann ein im Rohraktor gehaltenes zu justierendes Element gegenüber Umwelteinflüssen abgeschirmt werden. Ein Rohraktor kann dabei vorzugsweise aus einem oder mehreren ebenen Elementen hergestellt werden. In der Ebene lassen sich die dünnen Wandteile einfach herstellen, beispielsweise durch Prägeverfahren. So könnte, in einer nicht zur Erfindung gehörigen Ausführungsform, ein Rohraktor anstelle des vorbeschriebenen Umbiegens von Armen eines entsprechenden ebenen Teils auch aus einem im wesentlichen rechteckigen ebenen Teil hergestellt werden, das hierzu entsprechend gebogen oder "gerollt" wird. Das Verbinden der Kanten kann durch Schweißen oder Löten erfolgen.

In einer anderen Ausführungsform können bei Verwendung eines Ausgangselements mir einem zentralen Bereich und sechs Arme jeweils drei Arme in alternierender Reihenfolge in jeweils entgegengesetzter Richtung um im Wesentlichen 90 ° umgebogen sein. Ein derartiger Aktor kann sowohl im zentralen Bereich ein zu justierendes Element aufnehmen als auch an den Enden der jeweils drei Arme jeweils mit einem zu justierenden Element bzw. einem Trägerelement, in dem ein zu justierendes Element gehalten ist, verbunden sein. Sind in jedem Arm jeweils zwei justierbereiche vorgesehen, so können die drei Element zueinander justiert werden. Dabei, kann zunächst ein Justieren zweier Elemente exfolgext, welche in einem Endbereich der drei Arme der einen Seite des Aktors bzw, in dessen zentralem Bereich gehalten sind. Im nächsten Schritt kann dann ein Justieren des im Endbereich der anderen drei Arme gehaltenen Elements erfolgen.

Die Erfindung geht hinsichtlich des Verfahrens von der Erkenntnis aus, dass das Justieren eines Aktors in vorteilhafter Weise zunächst in einem ersten Justiervorgang bei einer beliebigen Temperatur, beispielsweise Raumtemperatur, durchgeführt werden kann, dass anschließend zumindest die wesentlichen Bereiche des Aktors (in denen Spannungen in Folge der ersten Justiervorgangs eingefroren sind) durch eine Erwärmung auf eine vorgegebene Temperatur entspannt werden, und dass anschließend, wiederum bei einer beliebigen Temperatur, vorzugsweise Raumtemperatur, ein Nachjustieren des Aktors durchgeführt werden kann.

In einer Ausführustgsform des Verfahrens werden für das Entspannen als wesentliche Bereiche alle Bereiche, in denen nach dem ersten Justiervorgang Druck- oder Zugspannungen eingefroren sind, zumindest so lange auf eine hinsichtlich des Einsatztemperaturbereichs des Aktors kritische Temperatur (Tₖ) gebracht werden, bis Fließprozesse des Materials bei der kritischen Temperatur weitgehend abgeschlossen sind.

Unter einer kritischen Temperatur Tₖ wird in diesem Zusammenhang eine Temperatur verstanden, bei der die Fließgrenze einen solchen Wert aufweist, dass beim Durchfahren des gesamten Einsatztemperaturbereichs nur so geringe Dejustagen des justierten Aktors auftreten können, die innerhalb vorgegebener Toleranzen liegen. Bei üblichen Aktormaterialien, welche innerhalb eines Spezifikationsbereichs eine mit steigender Temperatur fallende Fließgrenze aufweisen, wird man die kritische Temperatur im oberen Bereich des Spezifikationsbereichs oder sogar eine über dessen Obergrenze T₀ liegende Temperatur wählen.

Nach der bevorzugten Ausführungsform wird der zweite Justiervorgang durch das Erhitzen und Abkühlen eines ersten Teilbereichs eines weiteren Justierbereichs des Aktors durchgeführt, wobei der weitere Justierbereich so beschaffen ist, dass im Vergleich zum ersten Justierbereich bei gleicher zugeführter Energie ein kleinerer justiereffekt bewirkt würde. Selbstverständlich kann sich die Energie des zweiten Justiervorgangs bzw. der zeitliche Verlauf der Leistung zur Erhitzung des betreffenden Bereichs beim zweiten Justiervorgang unterscheiden und insbesondere an den gewünschten Justiereffekt bzw. Justierweg angepasst sein.

Nach einer Ausführungsform der Erfindung kann als kritische Temperatur Tₖ im Wesentlichen diejenige Temperatur innerhalb des Einsatztemperaturbereichs gewählt werden, bei der innerhalb des Einsatzteinperaturbeteichs die minimale Fließgrenze σₚ des Materials gegeben ist. In diesem Fall ist gewährleistet, dass innerhalb des Einsätztetuptraturbereichs kein Fließen des Materials in denjenigen Bereichen des Aktors auftritt, in denen in Folge des Justagevorgangs Eigenspannungen auftreten.

Die vorstehend erläutexte Möglichkeit der Auswahl einer noch höheren Temperatur setzt in der Praxis voraus, dass nut lokal eine entsprechende Erwärmung der wesentlichen Bereiche vorgenommen wird. Dies gilt zumindest dann, wenn der Aktor Teil einer Baugruppe ist, in der auch solche Bauelemente exathalten sind, die als maximale Temperatur der oberen Temperatur T₀ des geplanten Einsatztemperaturbexeichs ausgesetzt werden dürfen. Die wesentlichen Bereiche unxfassen diejenigen Bereiche, die bei einem Justiervorgang der thermischen Schrumpfung unterliegen, aber auch diejenigen, die diese Schrumpfung behindern.

In einer anderen Ausführungsform des Verfahrens können als wesentliche Bereiche im Wesentlichen nur diejenigen Bereiche auf eine vorgegebene Entspannungstemperatut erwärmt werden, in denen nach dem ersten Justiervorgang Druckspannungen eingefroren sind, wobei die Entspannungstemperatur so gewählt ist, das durch das Erwärmen eine thermische Expansion der betreffenden Bereiche die Zugspannungen die in denjenigen Bereichen, in denen nach dem ersten justiervorgwg Zugspannungen eingefroren sind, über die Fließgrenze erhöht werden, so dass ein Flie-βen des Material in diesen Bereichen eintritt. Hierdurch wird mit anderen Worten durch die Erwärmung der Bereiche mit Druckspannungen und die damit erzeugte thermische Expansion dieser Bereiche ein Recken der Bereiche mit Zugspannungen durchgeführt. Die Entspannungstemperatur wird dabei vorzugsweise so gewählt, dass nach dem Entspannen bei einem erneuten Erwärmen aller Bereiche, in denen Spannungen eingefroren sind, auf eine kritische Temperatur (vgl. hierzu die vorstehenden Erläuterungen) keine Fließprozesse und damit Dejustagen des Aktors auftreten.

Das Erhitzen für den eigentlichen Justiervorgang und das Erwärmen für das Erwärmen nach dem justiervorgang kann beispielsweise mittels eines Lasers, vorzugsweise eines Nd: YAG-Lasers oder Dioden-Lasers, erfolgen.

Nach einer Ausführungsform der Erfindung umfasst der erste Justiexbereich wenigstens eine Doppelbrücke, Diese Struktur bietet den Vorteil eines gegenüber einer Einfachbrücke wesentlich höheren Justiereffekts bzw. Verstellwegs.

In einer Weitetbildung der Erfindung umfasst der zweite justierbereich eine Einfachbrücke.

In einer Ausführungsform der Erfindung kann der erste justierbereich (mit größerem Justiereffekt) näher zum Trägexbereich des Aktors liegend vorgesehen sein als der zweite Justierbereich (mit geringerem Justiereffekt). Werden mit den Jusrierbereichen Winkeljustierungen des Aktors vorgenommen, d. h. wird der Aktor durch einen justiervorgang gekrümmt (und nicht nur in Richtung der jeweiligen Brücke verkürzt), so wird durch diese Maßnahme erreicht, dass bei Justxervorgängen mit dem ersten Justierbeteich neben der gewünschten Winkeljustierung nur ein relativ geringer, unerwünschter Versatz in lateraler Richtung erzeugt wird. Denn diese beiden justiereffekte liegen bei einem derartigen Aktor nicht entkoppelt vor. Der zweite justierbeteich erzeugt in Folge des gegenüber dem ersten Justierbereich geringeren Justiezeffekts ohnehin nut realtiv geringe laterale Justierbewegungen.

Bei der bevorzugten Ausführungsform ist der erste Justierbeteich so vorgesehen, dass eine durch diesen verlaufende Ebene, die vorzugsweise senkrecht zux Achse des Aktors verläuft, im Wesentlichen mit einer für den Justiervorgang maßgeblichen Ebene eines am Trägerbereich angeordneten, zu justierenden Elements zusammenfällt. Damit wird bei der erwünschten Wiakeljustierung ein lateraler Versatz auf Null reduziert.

In einer weiteren, nicht zur Erfindung gehörigen Ausführungsform weist der Aktor einen im Wesentlichen hohlzylindrischen Mantel auf, in welchem der erste und zweite justierbezeich ausgebildet sind, wobei jeder justierbereich vorzugsweise drei über den Umfang verteilte Brücken umfasst. Mittels eines derartigen Aktors lässt sich sowohl ein Kippen des beispielsweise zentral im Mantel oder in einer Boden-oder Deckelwandung gehaltenen zu justierenden Elements um zwei Achsen (Kippbewegungen um zwei Achsen) als auch ein axiales Justieren (durch gleichmäßiges Verkürzen aller drei Brücken) durchführen. Zudem kann ein laterales justieren erfolgen, wenn die Brücken so positioniert sind, dass die Kippbewegungen ausreichende Bewegungen des zu justierenden Elements (auf einer Kreisbahn) erzeugen. Die ist insbesondere dann der Fall, wenn die Brücken einen ausreichenden axialen Abstand von dem zu justierenden Element aufweisen.

Ein erfindungsgemäßes optisches Bauelement umfasst ein Trägerelement und einen Aktor, an welchem ein zu justierendes optisches Element angeordnet ist. Dieses kann mittels des Aktors gegenüber dem Trägerelement oder einem damit verbundenen weiteren optischen Element justiert Werden.

Unter einem optischen Element wird im Sinne der vorliegenden Erfindung jedes Element verstanden, dass für die Führung oder sonstige Beeinflussung von Licht dient, beispielsweise Lichtwellenleiter, Linsen, Filter, Spiegel oder dergleichen.

In einer Ausführungsform kann das Trägerelement einen Aufnahmebereich für die im wesentlichen hohlzylindrische Wandung des Aktors oder die umgebogenen Arme des Aktors aufweisen, wobei der Aufnahmebereich vorzugsweise eine Anschlagfläche für die Stirnseite der hohlzylindrischen Wandung oder die Stirnseiten der umgebogenen Arme umfasst. Der Aktor kann so in eine definierte axiale Lage auf das Trägerelement aufgesteckt werden. In dieser Lage können die beiden Teil fest verbunden werden, z.B. verklebt, verschweißt oder verlötet werden.

Zur Montage und zum Justieren eines weiteren optischen Elements kann das Trägerelement einen zweiten Aufnahmebereich für einen weiteren Aktor aufweisen, an dessen Trägerbereich ein weiteres optisches Element vorgesehen ist, wobei der weitere Aktor den ersten Aktor und das an diesem angeordnete optische Element umfasst.

Mittels eines Aktors, der sechs. Arme aufweist, von denen jeweils 3 in entgegengesetzte Richtungen um ca. 90° umgebogen wurden, wobei an jedem der Arme ein erster und ein zweiter Justierbereich vorgesehen sind, kann ein optisches Bauelement mit zwei Trägerelementen realisiert werden, wobei jeweils eines dex Trägerelemente mit jeweils den in einer Richtung umgebogenen drei Armen verbunden ist. In jedem Trägerelement kann ein optisches Element gehalten sein. Im zentralen Bereich des Aktors kann ein weiteres optisches Element gehalten sein, das relativ zu den Trägerelementen justiert werden kann. Auf diese Weise kann z. B. ein optischer Koppler oder passiver Multiplexer realisiert werden. In diesem Fall sind in den Trägerelementen jeweils ein oder mehrere Lichtwellenleiter gehalten und im zentralen Bereich ein oder mehrere Filter, Spiegel oder dergleichen.

Weitere Ausführungsforinen der Erfindung ergeben sich aus den Unteransptüchen.

Die Erfindung wird im Folgenden anhand der in der Zeichnung enthaltenen Figuren näher erläutert. Im Einzelnen zeigen:
- Fig. 1: schematische Datstellungen des Laserstrahl-Justierverfahrens;
- Fig. 2: eine nicht zur Erfindung gehörige Ausführungsform eines Rohraktors;
- Fig. 3: eine Ausführungsform eines dreiarmigen Aktors nach der Erfindung;
- Fig. 4: ein passiver optischer Multiplexer nach der Erfindung und
- Fig. 5: eine Ausführungsform eines sechsarmigen Aktors nach der Erfindung

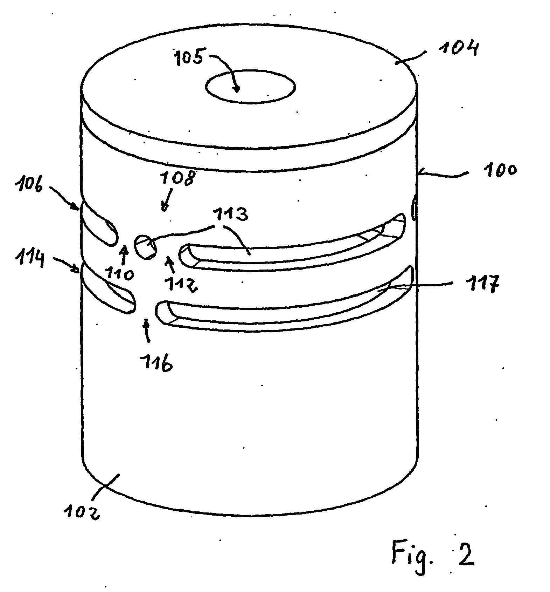

Fig. 2 zeigt einen rohtförmigen Aktor 100 (Rohraktor) für das eingangs beschriebene Laserstrahljustierverfahren, der einen hohlzylindrischen Mantel bzw. Wandung 102 und einen Deckel 104 urafasst. Im Deckel 104 ist ein kreisförmiger Durchbruch 105 vorgesehen, der in der Längsachse des Aktors 100 einen Lichtstrahl (nicht dargestellt) hindutchueten lässt. An der Innen- oder Außenseire des Deckels 104 kann ein zu justierendes optisches Element, beispielsweise eine Linse, ein Spiegel oder ein Reflexions- oder Transmissionsfilter (nicht dargestellt), angeordnet sein.

In der hohlzylindrischen Wandung 102 ist ein erster Justierbereich 106 vorgesehen, welcher drei Doppelbrücken 108 umfasst, die jeweils einen Winkelabstand von 120° aufweisen. Damit lässt sich durch ein Verkürzen einer Doppelbrücke 108 bzw. durch das Verkürzen einer Brücke 110, 112 der Doppelbrücken 108 ein Verkippen des Deckels 104 erreichen. Denn zwischen den Brücken 110, 112 sind Durchbrüche 113 vorgesehen, so dass bei einem Verkürzen der Brücken 110, 112 einer Doppelbrücke 108 die Brücken 110, 112 der beiden anderen Doppelbrücken 108 nur auf Biegung beansprucht werden. Mittels der Doppelbrücken 108 kann ein am Deckel angeordnetes zu justierendes Element um zwei Achsen gekippt werden. Gleichzeitig wird das zu justierende Element selbstverständlich auch leicht lateral (im Wesentlichen parallel zum Deckel 104) versetzt, da die Kippachsen nicht in der Ebene des zu justierenden Elements liegen. Je kleiner der axiale Abstand der Doppelbrücken 108 vom Deckel 104 ist, um so kleiner ist jedoch der laterale Versatz bei einem Verkippen des Deckels durch das Verkürzen wenigstens einer der Brücken 110, 112 der Doppelbrücken 108. Da die lateralen und Kippbewegungen nicht entkoppelt erfolgen, sind bei dem Aktor gemäß Fig. 2 die Doppelbrücken 108 relativ nahe (in axialer Richtung) an den Deckel herangerückt, so dass bei einem Justiervorgang der laterale Versatz des zu justierenden Elements gegenüber dem Winkelversatz vernachlässigbar klein ist.

Werden bei dem Aktor nach Fig. 2 in einem Justiervorgang alle Doppelbrücken 108 in gleicher Weise verkürzt, so lässt sich auch ein axiales Justieren des zu justierenden Elements erreichen. Beispielsweise kann so der Brennpunkt einer Linse oder die Taille des Strahls eines Lasers axial justiert werden.

Nach dem ersten Justiervorgang mittels der Doppelbrücken 108, der beispielsweise bei Raumtemperatur erfolgt, werden die einzelnen Brücken 110, 112 der Doppelbrücken 108 erwärmt, so dass die eingefrorenen Spannungen abgebaut werden. Da die Fließgrenze der meisten Materialien mit zunehmender Temperatur sinkt, kann eine Erwärmung der Brücken 108 (und der umgebenden Bereiche, in denen Spannungen eingefroren sind) auf die maximal Temperatur des Spezifikationsbereichs vorgenommen werden, so dass bei einem späteren Erwärmen oder Abkühlen der Brücken 110,112 auf eine beliebige Temperatur innerhalb des Spezifikationsbereichs kein Fließen des Materials eintritt und der Aktor in diesen Bereichen dejusdert wird.

Nach diesem Abbau der Spannungen in den Brücken 110,112, was selbstverständlich mit einer Dejustage verbunden ist, kann bei dem Aktor nach Fig. 2 ein Nachjustieren mittels des zweiten Justierbereichs 114 vorgenommen werden. Der zweite Justierbereich 114 umfasst drei Einfachbrücken 116, die wiederum in im Wesentlichen der selben Ebene (senkrecht zur Achse des Aktors) in einem Winkelabstand von 120° angeordnet sind. Zwischen den Brücken 116 sind im Mantel 102 Durchbrüche 117 vorgesehen. Das Prinzip der Justage mittels der Einfachbrücken 116 des zweiten Justierbereichs 114 entspricht dem vorstehend, in Verbindung mit dem ersten Justierbereich 106 beschriebenen Prinzip. Bei einem Justieren der Einfachbrücken 116 werden diese nicht über den gesamten Querschnitt erhitzt, sondern lediglich in einem (vorzugsweise mittleren) Teilbereich. Die nicht über die Fließgrenze erhitzen Teilbereiche nehmen beim Erhitzen des betreffenden Bereichs über die Fließgrenze die Zugspannungen und nach dem Abkühlen dieses Bereichs die Druckspannungen auf. Da der Justiereffekt, der mittels einer Einfachbrücke 116 erzielbar ist, wesentlich kleiner ist als der Justierbereich, der mittels einer Doppelbrücke erreichbar ist, kann mittels des zweiten Justierbereichs eine feinere Justierung erfolgen. Zudem ist der Effekt einer Dejustage, die sich bei einem nachträglichen Erhitzen der wesentlichen Bereiche des zweiten Justierbereichs auf eine gegenüber der Temperatur, bei der die Justierung erfolgte, höhere Temperatur sehr gering.

Auf ein nochmaliges "Tempern", um die Spannungen der Einfachbrücke zu reduzieren, kann daher verzichtet werden. Selbstverständlich ist es jedoch möglich, beim Justieren der Brücken 116 des zweiten Justierbereichs ein gewisses "Überjustieren" vorzunehmen, d.h. ein mehr an Justierweg für das zu justierende Element zu bewirken, so dass bei einem Abbau der Spannungen durch einen nachfolgenden Temperprozess zunächst eine "Verbesserung" der Justierposition des zu justierenden Elements ergibt.

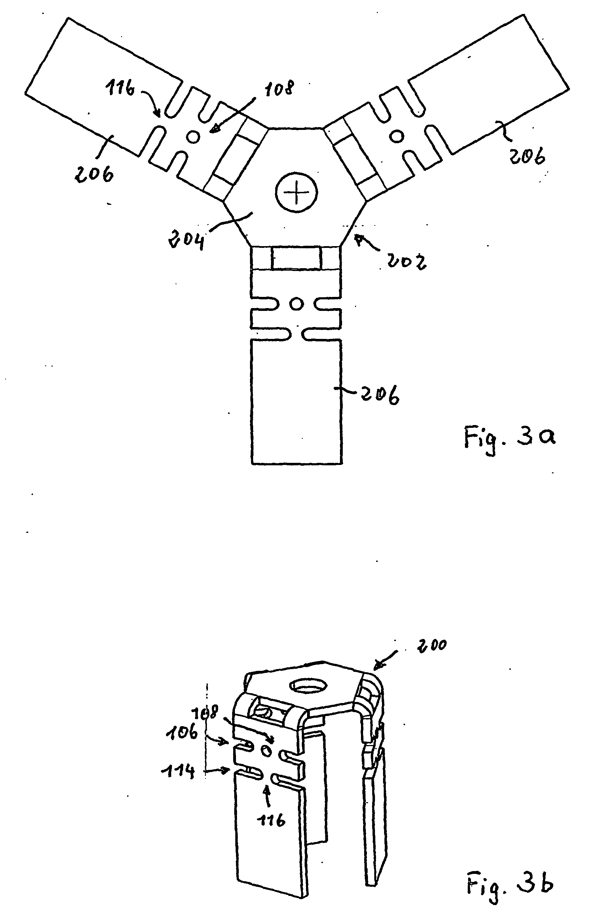

Fig. 3 zeigt einen dreiarmigen Aktor 200, der hinsichtlich seiner Funktion weitestgehend dem Rohraktor 100 entspricht. Der Aktor 200 ist aus einem ebenen Element 202 hergestellt, das beispielsweise als Stanzteil hergestellt werden kann. Das Element 202 umfasst einen zentralen Bereich 204 und drei sich radial erstreckende Arme 206. Der zentrale Bereich 204 weist wiederum einen zentralen kreisförmigen Durchbruch 208 auf, der in seiner Funktion beim fertigen Aktor 200 dem Durchbruch 105 im Deckel 104 des Aktors 100 entspricht. Zur Herstellung des Aktors 200 werden nach einem Ausstanzen des Elements 202 die Arme 206 in etwa rechwinklig umgebogen, so dass der in Fig. 3b dargestellte dreiarmige Aktor 200 entsteht. Jeder Arm 206 weist eine Doppelbrücke 108 und eine Einfachbrücke 116 auf, die in ihren Funktionen weitestgehend den Funktionen der betreffenden Elemente entsprechen, die vorstehend im Zusammenhang mit dem Aktor 100 nach Fig. 2 beschrieben wurden.

Der Aktor 200 nach Fig. 3 weist gegenüber dem Aktor nach Fig. 2 den Vorteil einer wesentlich einfacheren Herstellbarkeit auf.

Eine nicht dargestellte Abwandlung des in Fig. 2 dargestellten Aktors kann aus einem Stanzteil hergestellt werden, das anstelle von drei Armen sechs Arme in einem Winkelabstand von 60° aufweist. Werden die sechs Arme nach einer Seite umgebogen und die Seitenkanten der Arme verbunden, beispielsweise verlötet oder verschweißt, so entsteht praktisch ein Rohraktor nach Fig. 2. Im Unterschied zu diesem ist der aus dem Stanzteil hergestellte Aktor jedoch wesentlich einfacher und damit kostengünstiger herzustellen.

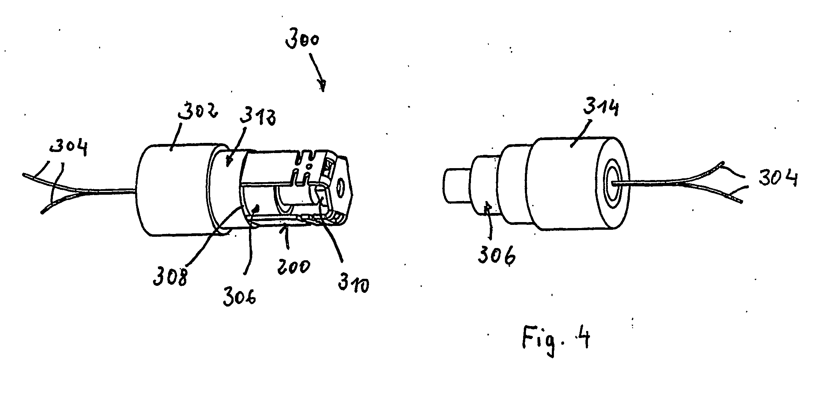

Fig. 4 zeigt ein optisches Bauelement 300, bei dem es sich z.B. um einen optischen Koppler oder passiven optischen Multiplexer handeln kann. Das Bauelement 300 umfasst ein erstes Trägerelement 302, in dem zwei Lichtwellenleiter 304 gehalten sind. Das Trägerelement 302 weist einen Aufnahmebereich 306 für einen Aktor auf, bei dem es sich bei der Ausführungsform nach Fig. 4 um einen dreiarmigen Aktor 200 nach Fig. 3 handelt. Bei dem Aufnahmebereich 306 handelt es sich um einen zylindrischen Fortsatz, an dessen Stirnseite die Stirnseiten der Lichtwellenleiter 304 zugänglich sind. Eine Schulter am rückwärtigen Ende des Aufnahmebereichs 306 bildet einen Anschlag 308 für die stirnseitigen Enden der Arme des Aktors 200. Damit kann der Aktor 200 in eine definierte axiale Position auf das Trägerelement 302 aufgesteckt werden. Anschließend kann der Aktor mit dem Trägerelement fest verbunden, beispielsweise verklebt, verlötet oder verschweißt werden. An der Innenseite des zentralen Bereichs des Aktors 200 ist ein zu justierendes optisches Element 310, beispielsweise ein Filter oder ein teilweise durchlässiger Spiegel angeordnet. Mittels des Aktors 200 kann das optische Element 310 hinsichtlich seiner Winkelstellung bzw. seiner axialen Position in Bezug auf die Stirnflächen der Lichtwellenleiter 304 justiert werden.

Das Trägerelement 302 weist darüber hinaus einen weiteren Aufnahmebereich 312 für einen weiteren, nicht näher dargestellten Aktor auf. Hierbei kann es sich ebenfalls um einen dreiarmigen Aktor 200 nach Fig. 3 handeln, der wie zuvor für den ersten Aktor beschrieben, auf dem Trägerelement 302 befestigt ist. Der weitere Aktor dient zur Halterung und Justage eines weiteren Trägerteils 314, in dem ebenfalls zwei Lichtwellenleiter 304 gehalten sind. Das Trägerelement 314 kann identisch mit dem ersten Trägerelement 302 ausgebildet sein. Der erste Haltebereich 306 kann im zentrischen Bereich des weiteren, nicht dargestellten Aktors fixiert sein.

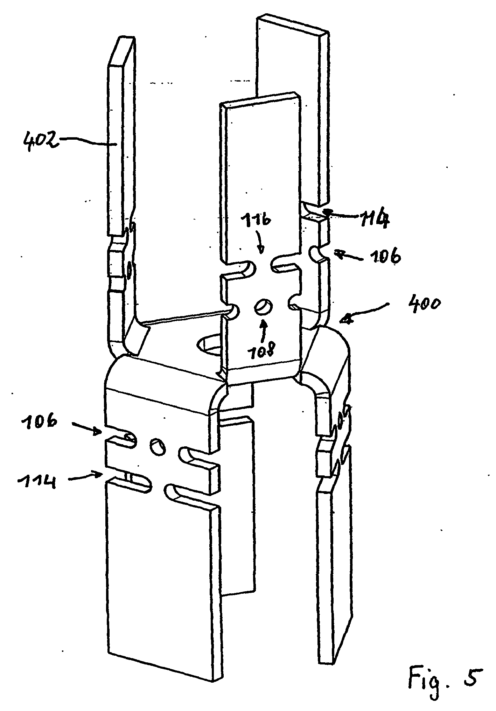

An Stelle der beiden Aktoren, die bei dem optischen Element nach Fig. 4 verwendet sind, kann auch ein einziger Aktor 400 nach Fig. 5 verwendet werden. Dieser ist aus einem Stanzteil mit sechs Armen 402 hergestellt, die abwechselnd nach oben bzw. nach unten umgebogen sind. Jeder der Arme 402 weist eine Doppelbrücke 106 und eine Einfachbrücke 114 auf, deren Funktion bereits zuvor beschrieben wurde. Jeweils drei Arme auf jeder Seite des Aktors 400 werden mit jeweils einem Trägerelement 302, 314 verbunden. Im zentralen Bereich des Aktors 400 kann das zu justierende optische Element gehalten sein. Das Justieren erfolgt dann in der vorstehend beschriebenen Weise. Selbstverständlich kann auch zunächst eines der beiden Trägerelemente mit dem Aktor verbunden werden und zunächst das im zentralen Bereich des Aktors gehaltene Element in Bezug auf die Stirnflächen der betreffenden Lichtwellenleiter 304 justiert werden. Anschließend kann dann das zweite Trägerelement mit den übrigen drei Armen des Aktors verbunden und das zweite Trägerelement in Bezug auf die bereits justierten Teile justiert werden.

## Patentansprüche (Patentansprüche für folgende(n) Vertragsstaat(en): AT, BE, CH, LI, CY, DE, DK, ES, FI, GR, IE, IT, LU, MC, NL, PT, SE, TR, AL, LT, LV, MK, RO, SI)

1. Laserjustierbarer Aktor, insbesondere für das Justieren optischer oder faseroptischer Komponenten,
a) wobei der Aktor (100, 200, 400) einen Trägerbereich (204) zur Aufnahme eines zu justierenden Elements (310) und mindestens einen ersten (106) und einen zweiten (114), jeweils durch Bestrahlen mit einem Laserstrahl justierbaren Justietbeteich aufweist,
b) wobei dex erste Justierbereich (106) so ausgebildet ist, dass bei Durchführung eines Justiervorgangs mittels des ersten Justierbereichs bei gleicher zugeführter Energie ein größerer Justiereffekt erzielt wird als bei der Durchführung eines weiteren Justiervorgangs mittels des zweiten Justiexbexeichs (114)
**dadurch gekennzeichnet**,
c) dass der Aktor (200, 400) aus einem im Wesentlichen ebenen Element (202) hergestellt ist, welches einen zentralen Bereich (204) umfasst, ausgehend von dem sich mehrere Arme (206) radial nach außen erstrecken, wobei die Arme (206) im Wesentlichen rechtswinklig zum zentralen Bereich umgebogen sind und den mindestens einen ersten (106) und einen zweiten (114) justierbereich aufweisen.

2. Aktor nach Anspruch 1, bei dem drei Arme (206) in vorzugsweise einem Winkelabstand von 120 ° vorgesehen sind und dass in jedem Arm (206) ein erster (106) und ein zweiter (114) justierbereich vorgesehen ist.

3. Aktor nach Anspruch 1, bei dem sechs Arme (206) in einem Winkelabstand von 60° vorgesehen sind, bei dem in jedem zweiten Arm (206) ein erster (106) und ein zweiter (114) justierbereich vorgesehen ist, bei dem alle Arme (206) in die selbe Richtung umgebogen sind und bei dem die Längsseiten der Arme (206) im umgebogenen Zustand verbunden, vorzugsweise verschweißt oder verlötet, sind und eine im wesentlichen hohlzylindrische Wandung des Aktors bilden.

4. Aktor nach Anspruch 1, bei dem sechs Arme (206) vorgesehen sind und jeweils drei Arme in alternierender Reihenfolge in jeweils entgegengesetzter Richtung um im Wesentlichen 90 ° umgebogen sind.

5. Aktor nach einem der vorhergehenden Ansprüche, bei dem der erste Justierbereich (104) wenigstens eine Doppelbrücke (108) umfasst, wobei bei Durchführung eines justietvorgangs eine Brücke (110, 112) als erster Teilbereich und die jeweils andere Brücke (112, 110) als zweiter Teilbereich dient.

6. Aktor nach einem der vorhergehenden Ansprüche, bei dem der zweite Justierbereich (114) eine Einfachbrücke (116) umfasst, wobei bei Durchführung eines justiervorgangs ein Teilbereich der Einfachbrücke als erster Teilbereich und der oder die jeweils verbleibenden Teilbereiche der Einfachbrücke als zweiter Teilbereich dienen.

7. Aktor nach einem der vorhergehenden Ansprüche, bei dem der erste Justierbereich (114) näher zum Trägerbereich (204) liegend vorgesehen ist als der zweite Justierbereich (106).

8. Aktor nach Anspruch 7, bei dem der erste justierbereich so vorgesehen ist, dass eine durch diesen verlaufende Ebene, die vorzugsweise senkrecht zur Achse des Aktors verlauft, im Wesentlichen mit einer für den Justiervorgang maßgeblichen Ebene eines am Trägerbereich angeordneten, zu justierenden Elements zusammenfallt.

9. Aktor nach einem der Ansprüche 5 bis 8, bei dem die Brücken als Stege mit einer größeren Dicke als die seitlich der Stege vorgesehenen Bereiche ausgebildet sind, wobei die Dicke der seitlich der Stege vorgesehenen Bereiche gegenüber der Dicke der Stege so gewählt ist, dass bei einem Justieavorgang ein ausreichender Justiereffekt erzielbar ist.

10. Optisches Bauelement mit einem Trägerelement und einem Aktor (100, 200, 400) nach einem der vorhergehenden Ansprüche, an welchem ein optisches Element (310) angeordnet ist.

11. Bauelement nach Anspruch 10, bei dem das Trägerelement (302) einen Authahmebereich (306) für die umgebogenen Arme (206) des Aktors (200, 400) aufweist, wobei der Aufnahmebereich (306) vorzugsweise eine Anschlagfläche (308) für die Stirnseiten der umgebogenen Arme (206) umfasst.

12. Bauelement nach Anspruch 11, bei dem das Trägerelement (302) einen zweiten Aufnahmebereich (312) für einen weiteren Aktor (100, 200, 400) aufweist, an dessen Trägerbereich (204) ein weiteres optisches Element (310) vorgesehen ist, wobei der weitere Aktor (100, 200, 400) den ersten Aktor und das an diesem angeordnete optische Element (310) umfasst.

13. Bauelement nach Anspruch 11 oder 12, bei dem ein erstes Trägerelement (302), in welchem vorzugsweise ein erstes optisches Element gehalten ist, mit den drei in einer Richtung umgebogenen Armen (206) eines Aktors (400) nach Anspruch 4 verbunden ist und bei dem ein zweites Trägerelement (314), in welchem ein zweites optisches Element gehalten ist, mit den drei in der anderen Richtung umgebogenen Armen des Aktors verbunden ist, wobei vorzugsweise im zentralen Bereich des Aktors ein drittes optisches Element gehalten ist.

14. justierverfahren für das Justieren eines Aktors nach einem der Ansprüche 1 bis 9 oder eines Bauelements nach einem der Ansprüche 10 bis 13,
a) bei dem ein erster Teilbereich eines ersten justierbereichs (106) des Aktors (100, 200, 400) lokal so weit definiert erhitzt wird, dass in Folge der von wenigstens einem zweiten Teilbereich des Justierbereichs des Aktors (100, 200, 400) behinderten thermischen Ausdehnung des erhitzten Teilbereichs in diesem Druckspannungen entstehen, die bei Erreichen der Fließgrenze σ_{F} des Materials des Teilbereichs zu einer plastischen Stauchung des erhitzen Teilbereichs fuhren und
b) bei dem sich der erhitzte erste Teilbereich während des Abkühlens verkürzt und so nach dem Abkühlen eine definierte Geometrieänderung des Aktors (100, 200, 400) eintritt, wobei in Folge einer Behinderung der Verkürzung durch den wenigstens einen zweiten Teilbereich im zuvor erhitzten ersten Teilbereich Zugspannungen entstehen und in dem wenigstens einen zweiten Bereich Druckspannungen eingefroren werden,
c) wobei wesentliche Bereiche des Aktors (100, 200, 300, 400), in denen nachdem Abkühlen die Zug- oder Druckspannungen eingefroren werden, nach dem Abkühlen durch eine erneute Erwärmung auf eine vorgegebene Temperatur entspannt werden und
d) wobei anschließend erneut ein Justiervorgang mittels des zweiten Justierbereichs (114) analog den Merkmalen a) und b) durchgeführt wird.

15. Verfahren nach Anspruch 14, bei dem der zweite Justiervotgang durch das Erhitzen und Abkühlen eines ersten Teilbereichs eines weiteren Justierbereichs (114) des Aktors (100, 200, 400) durchgeführt wird, wobei der weitere Justierbereich (114) vorzugsweise so beschaffen ist, dass im Vergleich zum ersten Justierbereich bei gleicher zugeführter Energie ein kleinerer justiereffekt bewirkt wird.

16. Verfahren nach Anspruch 14 oder 15, bei dem als wesentliche Bereiche alle Bereiche, in denen nach dem ersten Justiervorgang Druck- oder Zugspannungen eingefroren sind, zumindest so lange auf eine hinsichtlich des Einsatztexnpetaturbereichs des Aktors kritische Temperatur (Tₖ) gebracht werden, bis Fließprozesse des Materials bei der kritischen Temperatur weitgehend abgeschlossen sind.

17. Verfahren nach einem der Ansprüche 14 bis 16, bei dem als kritische Temperatur (Tₖ) im Wesentlichen diejenige Temperatur innerhalb des Einsatztemperaturbereichs ([Tᵤ;Tₒ]) gewählt wird, bei der innerhalb des Einsatztemperaturbereichs die minimale Fließgrenze σₚ des Materials gegeben ist.

18. Verfahren nach einem der Ansprüche 14 bis 17, bei dem ein Aktor (100, 200, 400) verwendet wird, bei dem die wesentlichen Bereiche aus einem Material bestehen, dessen Fließgrenze σₚ zumindest innerhalb des Einsatztemperaturbereichs ([Tᵤ;Tₒ]) mit steigender Temperatur monoton abfällt und dass als kritische Temperatur (Tₖ) im Wesentlichen die der Obergrenze des Einsatztemperaturbereichs entsprechende Temperatur (Tₒ) gewählt wird.

19. Verfahren nach einem der Ansprüche 14, 15, 17 oder 18, bei dem als wesentliche Bereiche im Wesentlichen nur diejenigen Bereiche auf eine vorgegebene Entspannungstemperatur erwärmt werden, in denen nach dem ersten Justiervorgang Druckspannungen eingefroren sind, wobei die Entspannungstempetatur so gewählt ist, dass durch das Erwärmen eine thermische Expansion der betreffenden Bereiche die Zugspannungen die in denjenigen Bereichen, in denen nach dem ersten Justiervorgang Zugspannungen eingefroren sind, über die Fließgrenze erhöht werden, so dass ein Fließen des Material in diesen Bereichen eintritt.

20. Verfahren nach einem der Ansprüche 14 bis 19, bei dem das Erhitzen für den eigentlichen Justiervorgang und/oder das Erwärmen der wesentlichen Bereiche nach dem ersten Justiervorgang mittels eines Lasers, vorzugsweise eines Nd: YAG-Lasers oder Dioden-Lasers, erfolgt.

## Patentansprüche (Patentansprüche für folgende(n) Vertragsstaat(en): FR, GB)

1. Optisches Bauelement mit einem Trägerelement (302) und wenigstens einem laserjustierbaren Aktor (100, 200, 400), insbesondere für das Justieren optischer oder faseroptischer Komponenten, an welchem ein optisches Element (310) angeordnet ist,
a) wobei der Aktor (100, 200, 400) einen Trägerbereich (204) zur Aufnahme des zu justierenden Elements (310) und mindestens einen ersten (106) und einen zweiten (114), jeweils durch Bestrahlen mit einem Laserstrahl justierbaren Justierbereich aufweist,
b) wobei der erste Justierbereich (106) so ausgebildet ist, dass bei Durchführung eines Justiervorgangs mittels des ersten justierbereichs bei gleicher zugeführter Energie ein größerer Justiereffekt erzielt wird als bei der Durchführung eines weiteren Justiervorgangs mittels des zweiten justierbereichs (114),
c) wobei der Aktor (200, 400) aus einem im Wesentlichen ebenen Element (202) hergestellt ist, welches einen zentralen Bereich (204) umfasst, ausgehend von dem sich mehrere Arme (206) radial nach außen erstrecken, wobei die Arme (206) im Wesentlichen rechts winklig zum zentralen Bereich umgebogen sind und den mindestens einen ersten (106) und einen zweiten (114) Justierbereich aufweisen,
d) wobei das Trägerelement (302) einen Aufnahmebereich (306) für die umgebogenen Arme (206) des Aktors (200, 400) aufweist, wobei der Aufnahmebereich (306) eine Anschlagfläche (308) für die Stirnseiten der umgebogenen Arme (206) umfasst.

2. Bauelement nach Anspruch 1, bei dem drei Arme (206) in vorzugsweise einem Winkelabstand von 120 ° füx den Aktor vorgesehen sind und bei dem in jedem Arm (206) ein erster (106) und ein zweiter (114) Justierbereich vorgesehen ist.

3. Bauelement nach Anspruch 1, bei dem sechs Arme (206) in einem Winkelabstand von 60 ° für den Aktor vorgesehen sind, bei dem in jedem zweiten Arm (206) ein erster (106) und ein zweiter (114) Justierbereich vorgesehen ist, bei dem alle Arme (206) in die selbe Richtung umgebogen sind und bei dem die Längsseiten der Arme (206) im umgebogenen Zustand verbunden, vorzugsweise verschweißt oder verlötet sind und eine im wesentlichen hohlzylindrische Wandung des Aktors bilden,

4. Bauelement nach Anspruch 1, bei dem sechs Arme (206) vorgesehen sind für den Aktor und dass jeweils drei Arme in alternierender Reihenfolge in jeweils entgegengesetzter Richtung um im Wesentlichen 90° umgebogen sind.

5. Bauelement nach einem der vorhergehenden Ansprüche, bei dem der erste Justierbereich (104) wenigstens eine Doppelbrücke (108) umfasst, wobei bei Durchführung eines Justiervorgangs eine Brücke (110, 112) als erster Teilbereich und die jeweils andere Brücke (112, 110) als zweiter Teilbereich dient.

6. Bauelement nach einem der vorhergehenden Ansprüche, bei dem der zweite Justierbereich (114) eine Einfachbrücke (116) umfasst, wobei bei Durchführung eines Justiervotgangs ein Teilbereich der Einfachbrücke als erster Teilbereich und der oder die jeweils verbleibenden Teilbereiche der Einfachbrücke als zweiter Teilbereich dienen.

7. Bauelement nach einem der vorhergehenden Ansprüche, bei dem der erste Justierbereich (114) näher zum Trägerbereich (204) liegend vorgesehen ist als der zweite Justierbereich (106).

8. Bauelement nach Anspruch 7, bei dem der erste Justierbereich so vorgesehen ist, dass eine durch diesen verlaufende Ebene, die vorzugsweise senkrecht zur Achse des Aktors verläuft, im Wesentlichen mit einer für den Justiervorgang maßgeblichen Ebene eines am Trägerbereich angeordneten, zu justierenden Elements zusammenfallt.

9. Bauelement nach einem der Ansprüche 5 bis 8, bei dem die Brücken als Stege mit einer größeren Dicke als die seitlich der Stege vorgesehenen Bereiche ausgebildet sind, wobei die Dicke der seitlich der Stege vorgesehenen Bereiche gegenüber der Dicke der Stege so gewählt ist, dass bei einem justiervorgang ein ausreichender Justiereffekt erzielbar ist.

10. Bauelement nach einem der vorhergehenden Ansprüche, bei dem das Trägerelement (302) einen zweiten Aufnahmebereich (312) für einen weiteren Aktor (100, 200, 400) aufweist, an dessen Trägerbereich (204) ein weiteres optisches Element (310) vorgesehen ist, wobei der weitere Aktor (100, 200, 400) den ersten Aktor und das an diesem angeordnete optische Element (310) umfasst.

11. Bauelement nach einem der vorhergehenden Ansprüche, bei dem ein erstes Trägerelement (302), in welchem vorzugsweise ein erstes optisches Element gehalten ist, mit den drei in einer Richtung umgebogenen Armen (206) eines Aktors (400) nach Anspruch 4 verbunden ist und dass ein zweites Trägerelement (314), in welchem ein zweites optisches Element gehalten ist, mit den drei in der anderen Richtung umgebogenen Armen des Aktors verbunden ist, wobei vorzugsweise im zentralen Bereich des Aktors ein drittes optisches Element gehalten ist.

12. Justietverrahren füt das Justieren eines Bauelements nach einem der Ansprüche 1 bis 11,
a) bei dem ein erster Teilbereich eines ersten Justierbereichs (106) des Aktors (100, 200, 400) lokal so weit definiert erhitzt wird, dass in Folge der von wenigstens einem zweiten Teilbereich des Justietbereichs des Aktors (100, 200, 400) behinderten thermischen Ausdehnung des erhitzten Teilbereichs in diesem Druckspannungen entstehen, die bei Erreichen der Fließgrenze σₚ des Materials des Teilbereichs zu einer plastischen Stauchung des erhitzen Teilbereichs führen und
b) bei dem sich der erhitzte erste Teilbereich während des Abkühlens verkürzt und so nach dem Abkühlen eine definierte Geometrieänderung des Aktors (100, 200, 400) eintritt, wobei in Folge einer Behinderung der Verkürzung durch den wenigstens einen zweiten Teilbereich im zuvor erhitzten ersten Teilbereich Zugspannungen entstehen und in dem wenigstens einen zweiten Bereich Druckspannungen eingefroren werden,
c) wobei wesentliche Bereiche des Aktors (100, 200, 300, 400), in denen nachdem Abkühlen die Zug- oder Druckspannungen eingefroren werden, nach dem Abkühlen durch eine erneute Erwärmung auf eine vorgegebene Temperatur entspannt werden, und
d) wobei anschließend erneut ein Justiervorgang mittels des zweiten Justierbereichs (114) analog den Merkmalen a) und b) durchgeführt wird.

13. Verfahren nach Anspruch 12, bei dem der zweite Justiervorgang durch das Erhitzen und Abkühlen eines ersten Teilbereichs eines weiteren Justierbereichs (114) des Aktors (100, 200, 400) durchgeführt wird, wobei dex weitere Justierbereich (114) vorzugsweise so beschaffen ist, dass im Vergleich zum ersten Justierbereich bei gleicher zugeführter Energie ein kleinerer Justiereffekt bewirkt wird.

14. Verfahren nach Anspruch 12 oder 13, bei dem als wesentliche Bereiche alle Bereiche, in denen nach dem ersten Justiervorgang Druck- oder Zugspannungen eingefroren sind, zumindest so lange auf eine hinsichtlich des Einsatztemperatwbereichs des Aktors kritische Temperatur (Tₖ) gebracht werden, bis Fließprozesse des Materials bei der kritischen Temperatur weitgehend abgeschlossen sind.

15. Verfahren nach einem der Ansprüche 12 bis 14, bei dem als kritische Temperatur (Tₖ) im Wesentlichen diejenige Temperatur innerhalb des Einsatztemperaturbereichs ([Tᵤ;Tₒ]) gewählt wird, bei der innerhalb des Einsatztetnperaturbereichs die minimale Fließgrenze σₚ des Materials gegeben ist.

16. Verfahren nach einem der Ansprüche 12 bis 15, bei dem ein Aktor (100, 200, 400) verwendet wird, bei dem die wesentlichen Bereiche aus einem Material bestehen, dessen Fließgrenze σ_{F} zumindest innerhalb des Einsatztempetatutbereichs ([T_{U};Tₒ]) mit steigender Temperatur monoton abfällt und dass als kritische Temperatur (Tₖ) im Wesentlichen die der Obergrenze des Einsatztemperaturbereichs entsprechende Temperatur (Tₒ) gewählt wird.

17. Verfahren nach einem der Ansprüche 12, 13, 15 oder 16, bei dem als wesentliche Bereiche im Wesentlichen nur diejenigen Bereiche auf eine vorgegebene Entspannungstemperatur erwärmt werden, in denen nach dern ersten justiervorgang Druckspannungen eingefroren sind, wobei die Entspannungstemperatut so gewählt ist, dass durch das Erwärmen eine thertnische Expansion der betreffenden Bereiche die Zugspannungen die in denjenigen Bereichen, in denen nach dem ersten Justiervorgang Zugspannungen eingefroren sind, über die Fließgtenze erhöht werden, so dass ein Fließen des Material in diesen Bereichen eintritt.

18. Verfahren nach einem der Ansprüche 12 bis 17, bei dem das Erhitzen für den eigentlichen Justiervorgang und/oder das Erwärmen det wesentlichen Bereiche nach dem ersten Justiervorgang mittels eines Lasers, vorzugsweise eines Nd: YAG-Lasers oder Dioden-Lasers, erfolgt.

## Claims (Claims for the following Contracting State(s): AT, BE, CH, Ll, CY, DE, DK, ES, FI, GR, IE, IT, LU, MC, NL, PT, SE, TR, AL, LT, LV, MK, RO, SI)

1. Laser-adjustable actuator, in particular for adjusting optical or fibre-optic components,
a) wherein the actuator (100, 200, 400) has a support region (204) for accommodating an element (310) to be adjusted and at least a first (106) and a second (114) adjusting region which can be adjusted in each case by exposure to a laser beam,
b) wherein the first adjusting region (106) is designed so that when carrying out an adjusting operation by means of the first adjusting region when the energy supplied is the same, a greater adjusting effect is achieved than when carrying out a further adjusting operation by means of the second adjusting region (114)
**characterised in that**
c) the actuator (200, 400) is produced from an essentially flat element (202) which comprises a central region (204), starting from which several arms (206) extend radially outwards, wherein the arms (206) are bent essentially at right angles to the central region and have at least a first (106) and a second (114) adjusting region.

2. Actuator according to claim 1, in which three arms (206) are provided preferably at an angular distance of 120° and in that a first (106) and a second (114) adjusting region is provided in each arm (206).

3. Actuator according to claim 1, in which six arms (206) are provided at an angular distance of 60°, in which a first (106) and a second (114) adjusting region is provided in each second arm (206), in which all arms (206) are bent in the same direction and in which the longitudinal sides of the arms (206) are connected, preferably welded or soldered, in the bent state and form an essentially hollow cylindrical wall of the actuator.

4. Actuator according to claim 1, in which six arms (206) are provided and in each case three arms are bent by essentially 90° in alternating sequence in each case in the opposite direction.

5. Actuator according to one of the preceding claims, in which the first adjusting region (104) comprises at least one double bridge (108), wherein when carrying out an adjusting operation, a bridge (110, 112) serves as a first part region and the particular other bridge (112, 110) serves as a second part region.

6. Actuator according to one of the preceding claims, in which the second adjusting region (114) comprises a single bridge (116), wherein when carrying out an adjusting operation, a part region of the single bridge serves as a first part region and the in each case remaining part region or part regions of the single bridge serves or serve as a second part region.

7. Actuator according to one of the preceding claims, in which the first adjusting region (114) is provided lying closer to the support region (204) than the second adjusting region (106).

8. Actuator according to claim 7, in which the first adjusting region is provided so that a plane running through the latter, which runs preferably vertically to the axis of the actuator, coincides essentially with a plane, which is crucial for the adjusting operation, of an element to be adjusted which is arranged on the support region.

9. Actuator according to one of claims 5 to 8, in which the bridges are designed as bars having a greater thickness than the regions provided laterally of the bars, wherein the thickness of the regions provided laterally of the bars with respect to the thickness of the bars is selected so that an adequate adjusting effect can be achieved during an adjusting operation.

10. Optical component having a support element and an actuator (100, 200, 400) according to one of the preceding claims, on which an optical element (310) is arranged.

11. Component according to claim 10, in which the support element (302) has an accommodating region (306) for the bent arms (206) of the actuator (200, 400) wherein the accommodating region (306) preferably comprises a stop surface (308) for the end-face sides of the bent arms (206).

12. Component according to claim 11, in which the support element (302) has a second accommodating region (312) for a further actuator (100, 200, 400), on the support region (204) of which a further optical element (310) is provided, wherein the further actuator (100, 200, 400) comprises the first actuator and the optical element (310) arranged on the latter.

13. Component according to claim 11 or 12, in which a first support element (302), in which preferably a first optical element is held, is connected to the three arms (206), which are bent in one direction, of an actuator (400) according to claim 4 and in which a second support element (314), in which a second optical element is held, is connected to the three arms, which are bent in the other direction, of the actuator, wherein a third optical element is held preferably in the central region of the actuator.

14. Adjusting process for adjusting an actuator according to one of claims 1 to 9 or a component according to one of claims 10 to 13,
a) in which a first part region of a first adjusting region (106) of the actuator (100, 200, 400) is heated locally in a defined manner and to such an extent that as a result of the thermal expansion of the heated part region restricted by at least one second part region of the adjusting region of the actuator (100, 200, 400), compressive stresses are produced in the heated part region and lead to plastic deformation of the heated part region when reaching the flow limit σ_{F} of the material of the part region and
b) in which the heated first part region is shortened during cooling and hence after cooling, a defined geometrical change in the actuator (100, 200, 400) occurs, wherein as a result of a restriction of the shortening by the at least one second part region in the previously heated first part region, tensile stresses are produced and compressive stresses are frozen in the at least one second region,
c) wherein essential regions of the actuator (100, 200, 300, 400), in which tensile or compressive stresses are frozen after cooling, are relaxed after cooling by renewed heating to a preset temperature and
d) wherein subsequently again an adjusting operation is carried out by means of the second adjusting region (114) analogously to features a) and b).

15. Process according to claim 14, in which the second adjusting operation is carried out by heating and cooling a first part region of a further adjusting region (11,4) of the actuator (100, 200, 400), wherein the further adjusting region (1,14) is preferably provided so that a smaller adjusting effect is achieved compared to the first adjusting region when the energy supplied is the same.

16. Process according to claim 14 or 15, in which as essential regions, all regions, in which compressive or tensile stresses are frozen after the first adjusting operation, are brought to a temperature (Tₖ), which is critical with respect to the use temperature range, at least until flow processes of the material are largely completed at the critical temperature.

17. Process according to one of claims 14 to 16, in which essentially that temperature within the use temperature range ([Tᵤ;Tₒ]) is selected as the critical temperature (Tₖ), at which the minimum flow limit σ_{F} of the material is given within the use temperature range.

18. Process according to one of claims 14 to 17, in which an actuator (100, 200, 400) is used, in which the essential regions consist of a material, the flow limit σ_{F} of which decreases monotonously at least within the use temperature range ([T_{U};T_{O}]) with increasing temperature and essentially the temperature (Tₒ) corresponding to the upper limit of the use temperature range is selected as the critical temperature (Tₖ).

19. Process according to one of claims 14, 15, 17 or 18, in which as essential regions, essentially only those regions are heated to a preset relaxation temperature in which compressive stresses axe frozen after the first adjusting operation, wherein the relaxation temperature is selected so that due to heating, a thermal expansion of the relevant regions, the tensile stresses are increased above the flow yielding point in those regions in which tensile stresses are frozen after the first adjusting operation, so that flow of the material occurs in these regions.

20. Process according to one of claims 14 to 19, in which heating for the actual adjusting operation and/or heating of the essential regions after the first adjusting operation is effected by means of a laser, preferably an Nd. YAG laser or diode laser.

## Claims (Claims for the following Contracting State(s): FR, GB)

1. Optical component having a support element (302) and at least one laser-adjustable actuator (100, 200, 400), in particular for adjusting optical or fibre-optic components, on which an optical element (310) is arranged,
a) wherein the actuator (100, 200, 400) has a support region (204) for accommodating the element (310) to be adjusted and at least a first (106) and a second (114) adjusting region which can be adjusted in each case by exposure to a laser beam,
b) wherein the first adjusting region (106) is designed so that when carrying out an adjusting operation by means of the first adjusting region when the energy supplied is the same, a greater adjusting effect is achieved than when carrying out a further adjusting operation by means of the second adjusting region (114),
c) wherein the actuator (200, 400) is produced from an essentially flat element (202) which comprises a central region (204), starting from which several arms (206) extend radially outwards, wherein the arms (206) are bent essentially at right angles to the central region and have at least a first (106) and a second (114) adjusting region,
d) wherein the support element (302) has an accommodating region (306) for the bent arms (206) of the actuator (200, 400), wherein the accommodating region (306) comprises a stop surface (308) for the end-face sides of the bent arms (206).

2. Component according to claim 1, in which three arms (206) are provided preferably at an angular distance of 120° for the actuator and in which a first (106) and a second (114) adjusting region is provided in each arm (206).

3. Component according to claim 1, in which six arms (206) axe provided at an angular distance of 60° for the actuator, in which a first (106) and a second (114) adjusting region is provided in each second arm (206), in which all arms (206) are bent in the same direction and in which the longitudinal sides of the arms (206) are connected, preferably welded or soldered, in the bent state and form an essentially hollow cylindrical wall of the actuator.

4. Component according to claim 1, in which six arms (206) are provided for the actuator and in that in each case three arms are bent by essentially 90° in alternating sequence in each case in the opposite direction.

5. Component according to one of the preceding claims, in which the first adjusting region (104) comprises at least one double bridge (108), wherein when carrying out an adjusting operation, a bridge (110, 112) serves as a first part region and the particular other bridge (112, 110) serves as a second part region.

6. Component according to one of the preceding claims, in which the second adjusting region (114) comprises a single bridge (116), wherein when carrying out an adjusting operation, a part region of the single bridge serves as a first part region and the in each case remaining part region or part regions of the single bridge serves or serve as a second part region.

7. Component according to one of the preceding claims, in which the first adjusting region (114) is provided lying closer to the support region (204) than the second adjusting region (106).

8. Component according to claim 7, in which the first adjusting region is provided so that a plane running through the latter, which runs preferably vertically to the axis of the actuator, coincides essentially with a plane, which is crucial for the adjusting operation, of an element to be adjusted which is arranged on the support region.

9. Component according to one of claims 5 to 8, in which the bridges are designed as bars having a greater thickness than the regions provided laterally of the bars, wherein the thickness of the regions provided laterally of the bars with respect to the thickness of the bars is selected so that an adequate adjusting effect can be achieved during an adjusting operation.

10. Component according to one of the preceding claims, in which the support element (302) has a second accommodating region (312) for a further actuator (100, 200, 400), on the support region (204) of which a further optical element (310) is provided, wherein the further actuator (100, 200, 400) comprises the first actuator and the optical element (310) arranged on the latter.

11. Component according to one of the preceding claims, in which a first support element (302), in which preferably a first optical element is held, is connected to the three arms (206), which are bent in one direction, of an actuator (400) according to claim 4 and in that a second support element (314), in which a second optical element is held, is connected to the three arms, which are bent in the other direction, of the actuator, wherein a third optical element is held preferably in the central region of the actuator.

12. Adjusting process for adjusting a component according to one of claims 1 to 11,
a) in which a first part region of a first adjusting region (106) of the actuator (100, 200, 400) is heated locally in a defined manner and to such an extent that as a result of the thermal expansion of the heated part region restricted by at least one second part region of the adjusting region of the actuator (100, 200, 400), compressive stresses are produced in the heated part region and lead to plastic deformation of the heated part region when reaching the flow limit σ_{F} of the material of the part region and
b) in which the heated first part region is shortened during cooling and hence after cooling, a defined geometrical change in the actuator (100, 200, 400) occurs, wherein as a result of a restriction of the shortening by the at least one second part region in the previously heated first part region, tensile stresses are produced and compressive stresses are frozen in the at least one second region,
c) wherein essential regions of the actuator (100, 200, 300, 400), in which tensile or compressive stresses are frozen after cooling, are relaxed after cooling by renewed heating to a preset temperature, and
d) wherein subsequently again an adjusting operation is carried out by means of the second adjusting region (114) analogously to features a) and b).

13. Process according to claim 12, in which the second adjusting operation is carried out by heating and cooling a first part region of a further adjusting region (114) of the actuator (100, 200, 400), wherein the further adjusting region (114) is preferably provided so that a smaller adjusting effect is achieved compared to the first adjusting region when the energy supplied is the same.

14. Process according to claim 12 or 13, in which as essential regions, all regions, in which compressive or tensile stresses are frozen after the first adjusting operation, are brought to a temperature (Tₖ), which is critical with respect to the use temperature range, at least until flow processes of the material are largely completed at the critical temperature.

15. Process according to one of claims 12 to 14, in which essentially that temperature within the use temperature range ([Tᵤ;Tₒ]) is selected as the critical temperature (Tₖ), at which the minimum flow limit σ_{F} of the material is given within the use temperature range.

16. Process according to one of claims 12 to 15, in which an actuator (100, 200, 400) is used, in which the essential regions consist of a material, the flow limit σ_{F} of which decreases monotonously at least within the use temperature range ([Tᵤ;Tₒ]) with increasing temperature and essentially the temperature (Tₒ) corresponding to the upper limit of the use temperature range is selected as the critical temperature (Tₖ).

17. Process according to one of claims 12, 13, 15 or 16, in which as essential regions, essentially only those regions are heated to a preset relaxation temperature in which compressive stresses are frozen after the first adjusting operation, wherein the relaxation temperature is selected so that due to heating, a thermal expansion of the relevant regions, the tensile stresses are increased above the flow limit in those regions in which tensile stresses are frozen after the first adjusting operation, so that flow of the material occurs in these regions.

18. Process according to one of claims 12 to 17, in which heating for the actual adjusting operation and/or heating of the essential regions after the first adjusting operation is effected by means of a laser, preferably an Nd: YAG laser or diode laser.

## Revendications (Revendications pour l'(les) Etat(s) contractant(s) suivant(s): AT, BE, CH, LI, CY, DE, DK, ES, FI, GR, IE, IT, LU, MC, NL, PT, SE, TR, AL, LT, LV, MK, RO, SI)

1. Actionneur ajustable par laser, en particulier pour l'ajustage de composants optiques ou à fibre optique,
a) l'actionneur (100, 200, 400) présentant une zone support (204) pour le logement d'un élément (310) à ajuster et au moins une première zone d'ajustage (106) et une seconde zone d'ajustage (114), ajustables respectivement par irradiation avec un faisceau laser,
b) la première zone d'ajustage (106) étant réalisée de telle sorte que, en cas de mise en oeuvre d'une opération d'ajustage au moyen de la première zone d'ajustage, on obtient avec une énergie amenée identique un effet d'ajustage plus grand qu'avec la mise en oeuvre d'une autre opération d'ajustage au moyen de la seconde zone d'ajustage (114),
**caractérisé en ce que**
c) l'actionneur (200, 400) est fabriqué à partir d'un, élément (202) sensiblement plan, qui comprend une zone (204) centrale, à partir de laquelle plusieurs bras (206) s'étendent radialement vers l'extérieur, les bras (206) étant repliés sensiblement à angle droit par rapport à la zone centrale et présentant la au moins une première zone d'ajustage (106) et une seconde zone d'ajustage (114),

2. Actionneur selon la revendication 1, sur lequel trois bras (206) sont prévus à de préférence une distance angulaire de 220° et sur lequel une première zone d'ajustage (106) et une seconde zone d'ajustage (114) sont prévues dans chaque bras (206).

3. Actionneur selon la revendication 1, sur lequel six bras (206) sont prévus à une distance angulaire de 60°, sur lequel une première zone d'ajustage (106) et une seconde zone d'ajustage (114) sont prévues dans chaque second bras (206), sur lequel tous les bras (206) sont repliés dans la même direction et sur lequel les côtés longitudinaux des bras (206) sont reliés, de préférence soudés ou brasés dans l'état replié et forment une paroi de l'actionneur essentiellement en forme de cylindre ceux.

4. Actionneur selon la revendication 1, sur lequel six bras (206) sont prévus et en ce que respectivement trois bras sont repliés de sensiblement 90° dans un ordre de succession alternatif dans une direction respectivement opposée.

5. Actionneur selon l'une quelconque des revendications précédentes, sur lequel la première zone d'ajustage (104) comprend au moins un double pont (108), un pont (110, 112) servant de première zone partielle et l'autre pont respectif (112, 210) de seconde zone partielle en cas de mise en oeuvre d'une opération d'ajustage.

6. Actionneur selon l'une quelconque des revendications précédentes, sur lequel la seconde zone d'ajustage (114) comprend un pont simple (116), une zone partielle du pont simple servant de première zone partielle et la ou les zones partielles respectivement restantes du pont simple servant de seconde zone partielle en cas de mise en oeuvre d'une opération d'ajustage.

7. Actionneur selon l'une quelconque des revendications précédentes, sur lequel la première zone d'ajustage (114) est prévue plus près de la zone support (204) que la seconde zone d'ajustage (106).

8. Actionneur selon la revendication 7, sur lequel la première zone d'ajustage est prévue de telle sorte qu'un plan agencé à travers cette zone, qui est de préférence perpendiculaire à l'axe de l'actionneur, coïncide essentiellement avec un plan, déterminant pour l'opération d'ajustage, d'un élément disposé sur la zone support et à ajuster.

9. Actionneur selon l'une quelconque des revendications 5 à 8, sur lequel les ponts sont formés sous la forme de nervures avec une épaisseur plus grande que les zones prévues sur le côté des nervures, l'épaisseur des zones prévues sur le côté des nervures étant choisie par rapport à l'épaisseur des nervures de telle sorte qu'un effet d'ajustage suffisant peut être obtenu lors d'une opération d'ajustage.

10. Composant optique avec un élément support et un actionneur (100, 200, 400) selon l'une quelconque des revendications précédentes, sur lequel est disposé un élément (310) optique.

11. Composant selon la revendication 10, sur lequel l'élément support (302) présente un zone de logement (306) pour les bras repliés (206) de l'actionneur (200, 400), la zone de logement (306) comprenant de préférence une surface de butée (308) pour les côtés avant des bras (206) repliés.

12. Composant selon la revendication 11, sur lequel l'élément support (302) présente une seconde zone de réception (312) pour un autre actionneur (100, 200, 400), sur la zone support duquel (204) est prévu un autre élément (310) optique, l'autre actionneur (100, 200, 400) comprenant le premier actionneur et l'élément (310) optique disposé sur celui-ci.

13. Composant selon la revendication 11 ou 12, sur lequel un premier élément support (302), dans lequel est maintenu de préférence un premier composant optique, est relié avec les trois bras (206), repliés dans une direction, d'un actionneur (400) selon la revendication 4 et sur lequel un second élément support (314), dans lequel est maintenu un second élément optique, est relié aux trois bras, repliés dans l'autre direction, de l'actionneur, un troisième élément optique étant maintenu de préférence dans la zone centrale de l'actionneur.

14. Procédé d'ajustage pour l'ajustage d'un actionneur selon l'une quelconque des revendications 1 à 9 ou d'un composant selon l'une quelconque des revendications 10 à 13,
a) sur lequel une première zone partielle d'une première zone d'ajustage (106) de l'actionneur (100, 200, 400) est réchauffée localement de façon définie si largement que, en conséquence de la dilatation thermique, gênée par au moins une seconde zone partielle de la zone d'ajustage de l'actionneur (100, 200, 400), de la zone partielle réchauffée, il se forme des tensions de pression dans cette zone, qui entraînent un refoulement plastique de la zone partielle réchauffée lorsqu'on atteint la limite d'écoulement σ_{F} du matériau de la zone partielle et
b) dans lequel la première zone partielle réchauffée se raccourcit pendant le refroidissement et une modification de géométrie définie de l'actionneur (100, 200, 400) intervient ainsi après le refroidissement, des tensions de traction se formant dans la première zone partielle réchauffée avant en conséquence d'une gêne du raccourcissement par la au moins une seconde zone partielle et des tensions de pression étant gelées dans la au moins une seconde zone,
c) des zones importantes de l'actionneur (100, 200, 300, 400), dans lesquelles les tensions de traction ou de pression sont gelées après le refroidissement, étant détendues après le refroidissement pax un nouveau réchauffement à une température prédéfinie, et
d) de nouveau une opération d'ajustage étant effectuée ensuite au moyen de la seconde zone d'ajustage (114) de façon identique aux caractéristiques a) et b).

15. Procédé selon la revendication 14, dans lequel la seconde opération d'ajustage est effectuée par le réchauffement et le refroidissement d'une seconde zone partielle d'une autre zone d'ajustage (114) de l'acrionneur (100, 200, 400), l'autre zone d'ajustage (114) étant constituée de préférence de telle sorte qu'on obtient un effet d'ajustage plus faible par rapport à la première zone d'ajustage avec une énergie amenée identique.

16. Procédé selon la revendication 14 ou 15, dans lequel, en tant que zones importantes, toutes les zones dans lesquelles des tensions de pression ou de traction sont gelées après la première opération d'ajustage, sont amenées à une température (Tₖ) critique en ce qui concerne la plage de température d'utilisation de l'actionneur au moins jusqu'à ce que des processus de fluage du matériau soient largement terminés à la température critique.

17. Procédé selon l'une quelconque des revendications 14 à 16, dans lequel, comme température critique (Tₖ), on choisit essentiellement la température à l'intérieur de la plage de température d'utilisation ([Tᵤ; Tₒ]) à laquelle on a la limite d'écoulement minimale σ_{F} du matériau à l'intérieur de la plage de température d'utilisation.

18. Procédé selon l'une quelconque des revendications 14 à 17, dans lequel un actionneur (100, 200, 400) est utilisé, dans lequel les zones importantes sont à base d'un matériau dont la limite d'écoulement σ_{F} décroît de façon monotone au moins à l'intérieur de la plage de température d'utilisation ([Tᵤ; Tₒ]) avec une température croissante et avec lequel, comme température critique (Tₖ), on choisit essentiellement la température (Tₒ) correspondant à la limite supérieure de la plage de température d'utilisation.

19. Procédé selon l'une quelconque des revendications 14, 15, 17 ou 18, dans lequel, en tant que zones importantes, on réchauffe à une température de détente prédéfinie essentiellement seulement les zones dans lesquelles des tensions de pression sont gelées après la première opération d'ajustage, la température de détente étant choisie de telle sorte que, par le réchauffement dû à une expansion thermique des zones concernées, les tensions de traction sont augmentées au-delà de la limite d'écoulement dans les zones où des tensions de traction sont gelées après la première opération d'ajustage, de sorte qu'un écoulement du matériau survient dans ces zones.

20. Procédé selon l'une quelconque des revendications 14 à 19, dans lequel le réchauffement poux l'opération d'ajustage proprement dite et/ou le réchauffement des zones essentielles après la première opération d'ajustage s'effectue au moyen d'un laser, de préférence un laser Nd: YAG ou d'un laser à diodes.

## Revendications (Revendications pour l'(les) Etat(s) contractant(s) suivant(s): FR, GB)

1. Composant optique comprenant un élément support (302) et au moins un actionneur (100, 200, 400) ajustable par laser, en particulier pour l'ajustage de composants optiques et à fibre optique, sur lequel est disposé un élément (310) optique,
a) l'actionneur (100, 200, 400) présentant une zone support (204) pour le logement de l'élément (310) à ajuster et au moins une première zone d'ajustage (106) et une seconde zone d'ajustage (114) ajustables respectivement par irradiation avec un faisceau laser,
b) la première zone d'ajustage (106) étant réalisée de telle sorte que, en cas de mise en oeuvre d'une opération d'ajustage au moyen de la première zone d'ajustage, on obtient avec une énergie amenée identique un effet d'ajustage plus grand qu'avec la mise en oeuvre d'une autre opération d'ajustage au moyen de la seconde zone d'ajustage (114),
c) l'actionneur (200, 400) étant fabriqué à partit d'un élément (202) sensiblement plan, qui comprend une zone (204) centrale, à partir de laquelle plusieurs bras (206) s'étendent radialement vers l'extérieur, les bras (206) étant repliés sensiblement à angle droit par rapport à la zone centrale et présentant là au moins une première zone d'ajustage (106) et une seconde zone d'ajustage (114),
d) l'élément support (302) présentant une zone de logement (306) pour les bras (206) repliés de l'actionneur (200, 400), la zone de logement (306) comprenant une surface de butée (308) pour les côtés avant des bras (206) repliés.

2. Composant selon la revendication 1, sur lequel trois bras (206) sont prévus à de préférence une distance angulaire de 120° pour l'actionneur et sur lequel une première zone d'ajustage (106) et une seconde zone d'ajustage (124) sont prévues dans chaque bras (206).

3. Composant selon la revendication 1, sur lequel six bras (206) sont prévus à une distance angulaire de 60° pour l'actionneur, sur lequel une première zone d'ajustage (106) et une seconde zone d'ajustage (114) sont prévues dans chaque second bras (206), sur lequel tous les bras (206) sont repliés dans la même direction et sur lequel les côtés longitudinaux des bras (206) sont reliés, de préférence soudés ou brasés dans l'état replié et forment une paroi de l'actionneur essentiellement en forme de cylindre creux.

4. Composant selon la revendication 1, sur lequel six bras (206) sont prévus pour l'actionneur et en ce que respectivement trois bras sont repliés de sensiblement 90° dans un ordre de succession alternatif dans une direction respectivement opposée.

5. Composant selon l'une quelconque des revendications précédentes, sur lequel la première zone d'ajustage (104) comprend au moins un double pont (108), un pont (110, 112) servant de première zone partielle et l'autre pont respectif (112, 110) de seconde zone partielle en cas de mise en oeuvre d'une opération d'ajustage.

6. Composant selon l'une quelconque des revendications précédentes, sur lequel la seconde zone d'ajustage (7,14) comprend un pont simple (116), une zone partielle du pont simple servant de première zone partielle et la ou les zones partielles respectivement restantes du pont simple servant de seconde zone partielle en cas de mise en oeuvre d'une opération d'ajustage.

7. Composant selon l'une quelconque des revendications précédentes, sur lequel la première zone d'ajustage (114) est prévue plus près de la zone support (204) que la seconde zone d'ajustage (106).

8. Composant selon la revendication 7, sur lequel la première zone d'ajustage est prévue de telle sorte qu'un plan agencé à travers cette zone, qui est de préférence perpendiculaire à l'axe de l'actionneur, coïncide essentiellement avec un plan, déterminant pour l'opération d'ajustage, d'un élément disposé sur la zone support et à ajuster.

9. Composant selon l'une quelconque des revendications 5 à 8, sur lequel les ponts sont formés sous la forme de nervures avec une épaisseur plus grande que les zones prévues sur le côté des nervures, l'épaisseur des zones prévues sur le côté des nervures étant choisie par rapport à l'épaisseur des nervures de telle sorte qu'un effet d'ajustage suffisant peut être obtenu lors d'une opération d'ajustage.

10. Composant selon l'une quelconque des revendications précédentes, sur lequel l'élément support (302) présente une seconde zone de réception (312) pour un autre actionneur (100, 200, 400), sur la zone support duquel (204) il est prévu un autre élément (310) optique, l'autre actionneur (100, 200, 400) comprenant le premier actionneur et l'élément (310) optique disposé sur celui-ci.

11. Composant selon l'une quelconque des revendications précédentes, sur lequel un premier élément support (302), dans lequel est maintenu de préférence un premier composant optique, est relié avec les trois bras (206), repliés dans une direction, d'un actionneur (400) selon la revendication 4 et en ce qu'un second élément support (314), dans lequel est maintenu un second élément optique, est relié aux trois bras, repliés dans l'autre direction, de l'actionneur, un troisième élément optique étant maintenu de préférence dans la zone centrale de l'actionneur.

12. Procédé d'ajustage pour l'ajustage d'un composant selon l'une quelconque des revendications 1 à 11,
a) sur lequel une première zone partielle d'une première zone d'ajustage (106) de l'actionneur (100, 200, 400) est réchauffée localement de façon définie si largement que, à la suite de la dilatation thermique, générée par au moins une seconde zone partielle de la zone d'ajustage de l'actionneur (100, 200, 400), de la zone partielle réchauffée, il se forme des tensions de pression dans cette zone, qui entraînent un refoulement plastique de la zone partielle réchauffée lorsqu'on atteint la limite de fluidité σ_{F} du matériau de la zone partielle et
b) dans lequel la première zone partielle réchauffée se raccourcit pendant le refroidissement et une modification de géométrie définie de l'actionneur (100, 200, 400) intervient ainsi après le refroidissement, des tensions de traction se formant dans la première zone partielle réchauffée avant en conséquence d'une gêne du raccourcissement par la au moins une seconde zone partielle et des tensions de pression étant gelées dans la au moins une seconde zone,
c) des zones importantes de l'actionneur (100, 200, 300, 400), dans lesquelles les tensions de traction ou de pression sont gelées après le refroidissement, étant détendues après le refroidissement pat un nouveau réchauffement à une température prédéfinie, et
d) de nouveau une opération d'ajustage étant effectuée ensuite au moyen de la seconde zone d'ajustage (114) de façon identique aux caractéristiques a) et b).

13. Procédé selon la revendication 12, dans lequel la seconde opération d'ajustage est effectuée par le réchauffement et le refroidissement d'une seconde zone partielle d'une autre zone d'ajustage (114) de l'actionneur (100, 200, 400), l'autre zone d'ajustage (114) étant constituée de préférence de telle sorte qu'on obtient un effet d'ajustage plus faible par rapport à la première zone d'ajustage avec une énergie amenée identique.

14. Procédé selon la revendication 12 ou 13, dans lequel, en tant que zones importantes, toutes les zones dans lesquelles des tensions de pression ou de traction sont gelées après la première opération d'ajustage, sont amenées à une température (Tₖ) critique en ce qui concerne la plage de température d'utilisation de l'actionneur au moins jusqu'à ce que des processus de fluage du matériau soient largement terminés à la température critique.

15. Procédé selon l'une quelconque des revendications 12 à 14, dans lequel, comme température critique (Tₖ), on choisit essentiellement la température à l'intérieur de la plage de température d'utilisation ([Tᵤ; Tₒ]) à laquelle on a la limite d'écoulement minimale σ_{F} du matériau à l'intérieur de la plage de température d'utilisation.

16. Procédé selon l'une quelconque des revendications 12 à 15, dans lequel un actionneur (100, 200, 400) est utilisé, dans lequel les zones importantes sont à base d'un matériau dont la limite d'écoulement σ_{F} décroît de façon monotone au moins à l'intérieur de la plage de température d'utilisation ([Tᵤ; Tₒ]) avec une température croissante et avec lequel, comme température critique (Tₖ), on choisit essentiellement la température (Tₒ) correspondant à la limite supérieure de la plage de température d'utilisation.

17. Procédé selon l'une quelconque des revendications 12, 13, 15 ou 16, dans lequel, en tant que zones importantes, on réchauffe à une température de détente prédéfinie essentiellement seulement les zones dans lesquelles des tensions de pression sont gelées après la première opération d'ajustage, la température de détente étant choisie de telle sorte que, par le réchauffement dû à une expansion thermique des zones concernées, les tensions de traction sont augmentées au-delà de la limite d'écoulement dans les zones où des tensions de traction sont gelées après la première opération d'ajustage, de sorte qu'un écoulement du matériau survient dans ces zones.

18. Procédé selon l'une quelconque des revendications 12 à 17, dans lequel le réchauffement pour l'opération d'ajustage proprement dite et/ou le réchauffement des zones essentielles après la première opération d'ajustage s'effectue au moyen d'un laser, de préférence un laser Nd: YAG ou d'un laser à diodes.
